# EUROPEAN PATENT SPECIFICATION

(11) **EP 4 219 092 B1**
(45) Date of publication and mention of the grant of the patent: **19.03.2025**
(21) Application number: 22154047.9
(22) Date of filing: 28.01.2022
(51) Int. Cl.: B25J 13/08, B25J 17/02, B25J 19/06, B25J 17/00, B25J 9/16, G05B 19/414

(54) **OPTIMIZED SAFETY ARCHITECTURE IN A ROBOT**
OPTIMIERTE SICHERHEITSARCHITEKTUR IN EINEM ROBOTER
ARCHITECTURE DE SÉCURITÉ OPTIMISÉE DANS UN ROBOT

(43) Date of publication of application: 02.08.2023
(73) Proprietor: Kassow Robots ApS, 2770 Kastrup (DK)
(72) Inventor: KASSOW, Kristian, 2300 Copenhagen S (DK)
(74) Representative: COPA Copenhagen Patents

(56) References cited:
- WO-A1-2021/249379
- CN-A- 113 661 033
- US-A1- 2014 067 124
- US-A1- 2022 184 810

## Description

The present disclosure relates to a robot, more particular to a robotic arm and/or a joint assembly for such robot or robotic arm. More specifically, the present disclosure relates to a safety architecture for such a robot.

### BACKGROUND

Robots and in particular robotic arms are widely used to perform a wide variety of automated tasks. Recently lightweight robots have increased in popularity for assisting human activities, e.g. in production facilities. These robots are commonly known as collaborative robots or cobots.

For robots, such as robotic arms, it is important to know the position of movable parts, as well as to ensure that the robot behaves, e.g. moves, as intended. Furthermore, it is of great importance, especially when automated and/or autonomous robots are used for assisting human activities and working alongside humans, that the robots comprise certain safety features and redundant systems to ensure the safety of the humans around.

Furthermore, there is a desire towards making robotic arms as compact as possible. Documents CN 113661033 A, WO 2021/249379 A1, US 2014/067124 A1 disclose other interesting joint assemblies with processing units.

### SUMMARY

It is an object of the present disclosure to at least provide improvements of the prior art and/or to solve or reduce problems known from the prior art. further object of the present disclosure to provide an advantageous or at least alternative robotic joint assembly and a robotic joint with a robotic joint assembly.

Thus, the present disclosure relates to a joint assembly for a robot and a robot comprising at least one such joint assembly.

Accordingly, a joint assembly for a robot is disclosed. The joint assembly comprises: a joint housing, a first motor, a second motor, and circuitry, such as a PCB and/or one or more PCBs. Also, a robot comprising the joint assembly, e.g. as a first joint assembly, is disclosed.

The robot and/or the joint assembly may comprise a first link and/or a second link. The first motor is connecting the joint housing with a first link and the first motor is adapted to rotate the first link relative to the joint housing around a first axis. The second motor is connecting the joint housing with a second link and the second motor is adapted to rotate the second link relative to the joint housing around a second axis. The second axis is non-parallel with the first axis. The circuitry is accommodated in the joint housing and comprises a first processing unit and a second processing unit. The first processing unit is adapted to control the first motor and the second processing unit is adapted to control the second motor.

The robot and/or the joint assembly may comprise a plurality of sensors, e.g. including a first primary sensor and a first secondary sensor. The first processing unit receives, e.g. from the first primary sensor and/or from the first secondary sensor, a first primary sensor signal indicative of a first motion characteristic of the first link relative to the joint housing. The first processing unit calculates the first motion characteristic of the first link relative to the joint housing at least based on the first primary sensor signal. The second processing unit receives, e.g. from the first primary sensor and/or from the first secondary sensor, a first secondary sensor signal indicative of the first motion characteristic of the first link relative to the joint housing. The second processing unit calculates the first motion characteristic of the first link relative to the joint housing at least based on the first secondary sensor signal.

The plurality of sensors, such as the first primary sensor and/or the first secondary sensor, may be sensing one or more parameters indicative of a motion characteristic of a corresponding link. In the present disclosure, "motion characteristic" may include movement and/or position and/or torque.

In some examples, the first primary sensor signal and the first secondary sensor signal may be received from the same sensor, such as the first primary sensor and/or the first secondary sensor. However, in other examples the first primary sensor signal may be received from the first primary sensor and the first secondary sensor signal may be received from the first secondary sensor, wherein the first primary sensor and the first secondary sensor are different sensors, e.g. of the same type or different types. In some examples the first primary sensor and/or the first secondary sensor may comprise a plurality of sub-sensors, e.g. the first primary sensor may comprise a plurality of current sensors, such as a plurality of current sensors respectively sensing current in a plurality of phases. Hence, the first primary sensor signal and/or the first secondary sensor signal may comprise a plurality of sub-signals from a plurality of sub-sensors. In some examples, the first primary sensor has one or more sub-sensors in common with the first secondary sensor. In some examples, the first primary sensor has less than all sub-sensors in common with the first secondary sensor.

Hence, by the present disclosure, a joint assembly and a robot is provided, which reduces the need for circuitry in a joint. For example, one PCB may comprise the two processing units and be capable of controlling two motors. Thereby, the circuitry necessary to realise the robot may be reduced.

Furthermore, the present disclosure also proposes a further optimization in that the two processors being adapted to control the two motors of the joint assembly, are also configured to independently perform redundant calculations of motion characteristic(s) of the joint assembly. Hence, it is an advantage of the present disclosure that processing units each perform multiple functions, and thereby the present disclosure reduces the number of processing units needed, i.e. the present disclosure provides an optimized architecture requiring less components. Thereby, providing for simpler and less expensive robots.

The robot may comprise one or more further rotatable joints. For example, the robot may comprise a plurality of joint assemblies, such as the disclosed joint assembly. Thus, the robot may comprise a first joint assembly and optionally a second joint assembly, a third joint assembly and/or a fourth joint assembly. Each or any of the first, second, third and/or fourth joint assembly may be like the disclosed joint assembly. Similarly, any specification in the following in relation to a joint assembly of the robot, such as the first, second, and/or third joint assembly may apply to the above disclosed joint assembly.

The first joint assembly may comprise a first joint housing, a first motor, a second motor, and first circuitry, such as a first PCB and/or one or more first PCBs. The second joint assembly may comprise a second joint housing, a third motor, a fourth motor, and second circuitry, such as a second PCB and/or one or more second PCBs. The third joint assembly may comprise a third joint housing, a fifth motor, a sixth motor, and third circuitry, such as a third PCB and/or one or more third PCBs. The fourth joint assembly may comprise a fourth joint housing, a seventh motor, and fourth circuitry, such as a fourth PCB and/or one or more fourth PCBs. The fourth joint assembly may comprise a tool interface.

A motor may be causing relative rotation around a respective axis. The plurality of motors, e.g. the first motor, the second motor, the third motor, the fourth motor, the fifth motor, the sixth motor and/or the seventh motor, may cause relative rotation around a plurality of respective axes. The plurality of motors may be at least 4 motors, such as at least 5 motors, such as at least 6 motors, such as at least 7 motors. The plurality of axes may correspondingly be at least 4 axes, such as at least 5 axes, such as at least 6 axes, such as at least 7 axes. The robot may be configured such that in at least some configurations the plurality of axes are non-parallel.

The motors may each comprise a control interface, e.g. comprising one or more control terminals. The first motor may comprise a first control interface. The second motor may comprise a second control interface. The third motor may comprise a third control interface. The fourth motor may comprise a fourth control interface. The fifth motor may comprise a fifth control interface. The sixth motor may comprise a sixth control interface. The seventh motor may comprise a seventh control interface. The motors of a joint assembly may be oriented such that their control interfaces are facing towards each other and/or such that their control interfaces are facing the interior of the joint housing. For example, the first control interface may be facing towards the second control interface and/or the first control interface may be facing the interior of the first joint housing, and wherein the second control interface is facing the interior of the first joint housing. Such orientation of the motors of the joint assembly makes it easier for connecting the motors to processing units, e.g. on a single PCB, between the motors, such as within the joint housing.

The motor(s), such as the first motor, the second motor, the third motor, the fourth motor, the fifth motor, the sixth motor, and/or the seventh motor, may comprise a gear assembly, e.g. an integral gear, such as a strain wave gear. Hence, a motor in the present disclosure may be a gear motor.

The robot may comprise a plurality of links, e.g. including a first link and a second link. The plurality of links may comprise a third link and/or a fourth link. The links may extend between the joint assemblies. For example, the first link may extend between a base of the robot and the first joint assembly. The second link may extend between the first joint assembly and the second joint assembly. The third link may extend between the second joint assembly and the third joint assembly. The fourth link may extend between the third joint assembly and the fourth joint assembly.

The first motor may be connecting the first joint housing with the first link. The first motor may be adapted to rotate the first link relative to the first joint housing around a first axis. The second motor may be connecting the first joint housing with the second link. The second motor may be adapted to rotate the second link relative to the first joint housing around a second axis. The second axis may be non-parallel with the first axis. The first circuitry may be accommodated in the first joint housing. The first circuitry may comprise a first processing unit and a second processing unit. The first processing unit may be adapted to control the first motor. The second processing unit may be adapted to control the second motor.

The further joint assemblies of the robot, such as the second joint assembly, the third joint assembly and/or the fourth joint assembly, may be similarly configured, i.e. having one motor to rotate one link relative to the joint housing around one axis, and another motor to rotate another link relative to the joint housing around another axis, and having circuitry, e.g. a single PCB, accommodated in the joint housing with two processing units being adapted to respectively control the two motors of the joint assembly. For example, the third motor may be connecting the second joint housing with the second link. The third motor may be adapted to rotate the second link relative to the second joint housing around a third axis. The fourth motor may be connecting the second joint housing with the third link. The fourth motor may be adapted to rotate the third link relative to the second joint housing around a fourth axis. The fourth axis may be non-parallel with the third axis. The second circuitry may be accommodated in the second joint housing. The second circuitry may comprise a third processing unit and a fourth processing unit. The third processing unit may be adapted to control the third motor. The fourth processing unit may be adapted to control the fourth motor.

One joint assembly, e.g. the most distant joint assembly, such as the fourth joint assembly, may comprise circuitry, e.g. a PCB, with a processing unit adapted to control the tool interface. For example, the fourth circuitry may comprise an eighth processing unit, e.g. in addition to a seventh processing unit. The eighth processing unit may be adapted to control the tool interface. The fourth circuitry may be accommodated in the fourth joint housing.

The robot and/or each or any of the one or more joint assemblies may comprise a plurality of sensors. The plurality of sensors may comprise a plurality of sensors for each motor and/or link attached to the respective motor. The sensors may comprise output position sensors obtaining angular position of a link relative to the joint housing. The sensors may comprise rotor position sensors obtaining angular position of a rotor of a motor. The sensors may comprise current sensors measuring current drawn by a motor. The sensors may comprise torque sensors obtaining torque provided by a motor. One or more of the sensors may comprise a plurality of sub-sensors, e.g. a plurality of current sensors, such as a plurality of current sensors respectively sensing current in a plurality of phases.

The robot and/or each or any of the one or more joint assemblies, such as the first joint assembly, may comprise a plurality of first sensors, e.g. including a first primary sensor and a first secondary sensor, adapted for sensing one or more parameters indicative of a first motion characteristic, such as movement and/or position and/or torque, of the first motor and/or the link attached to the first motor, i.e. the first link, relative to the first joint housing. The first primary sensor may be a first primary output position sensor obtaining angular position of the first link relative to the first joint housing. The first primary sensor may be a first primary rotor position sensor obtaining angular position of a rotor of the first motor. The first primary sensor may be a first primary current sensor and/or a plurality of first primary current sensors measuring current drawn by the first motor. The first primary sensor may be a first primary torque sensor obtaining the torque provided by the first motor. The first secondary sensor may be a first secondary output position sensor obtaining angular position of the first link relative to the first joint housing. The first secondary sensor may be a first secondary rotor position sensor obtaining angular position of a rotor of the first motor. The first secondary sensor may be a first secondary current sensor and/or a plurality of first secondary current sensors measuring current drawn by the first motor. The first secondary sensor may be a first secondary torque sensor obtaining the torque provided by the first motor.

The robot and/or each or any of the one or more joint assemblies, such as the first joint assembly, may comprise a plurality of second sensors, e.g. including a second primary sensor and a second secondary sensor and optionally one or more further second sensors, adapted for sensing one or more parameters indicative of a second motion characteristic, such as movement and/or position and/or torque, of the second motor and/or the link attached to the second motor, i.e. the second link, relative to the first joint housing. The second primary sensor may be a second primary output position sensor obtaining angular position of the second link relative to the first joint housing. The second primary sensor may be a second primary rotor position sensor obtaining angular position of a rotor of the second motor. The second primary sensor may be a second primary current sensor and/or a plurality of second primary current sensors measuring current drawn by the second motor. The second primary sensor may be a second primary torque sensor obtaining the torque provided by the second motor. The second secondary sensor may be a second secondary output position sensor obtaining angular position of the second link relative to the first joint housing. The second secondary sensor may be a second secondary rotor position sensor obtaining angular position of a rotor of the second motor. The second secondary sensor may be a second secondary current sensor and/or a plurality of second secondary current sensors measuring current drawn by the second motor. The second secondary sensor may be a second secondary torque sensor obtaining the torque provided by the second motor.

Similarly, the robot and/or each or any of the one or more joint assemblies may comprise a plurality of third, fourth, fifth, sixth and/or seventh sensors, e.g. including third, fourth, fifth, sixth and/or seventh primary sensors and third, fourth, fifth, sixth and/or seventh secondary sensors and optionally one or more further third, fourth, fifth, sixth and/or seventh sensors, adapted for sensing one or more parameters indicative of respective third, fourth, fifth, sixth and/or seventh motion characteristics, such as movement and/or position and/or torque, of the respective third, fourth, fifth, sixth and/or seventh motor and/or the link attached to that motor relative to the joint housing of the respective joint assembly. The third, fourth, fifth, sixth and/or seventh primary sensors may be third, fourth, fifth, sixth and/or seventh primary output position sensors obtaining angular position of the attached link relative to the joint housing of the respective joint assembly. The third, fourth, fifth, sixth and/or seventh primary sensors may be third, fourth, fifth, sixth and/or seventh primary rotor position sensors obtaining angular position of a rotor of the respective third, fourth, fifth, sixth and/or seventh motor. The third, fourth, fifth, sixth and/or seventh primary sensors may be third, fourth, fifth, sixth and/or seventh primary current sensors measuring current drawn by the respective third, fourth, fifth, sixth and/or seventh motor. The third, fourth, fifth, sixth and/or seventh primary sensors may be third, fourth, fifth, sixth and/or seventh primary torque sensors obtaining the torque provided by the respective third, fourth, fifth, sixth and/or seventh motor. The third, fourth, fifth, sixth and/or seventh secondary sensors may be third, fourth, fifth, sixth and/or seventh secondary output position sensors obtaining angular position of the attached link relative to the joint housing of the respective joint assembly. The third, fourth, fifth, sixth and/or seventh secondary sensors may be third, fourth, fifth, sixth and/or seventh secondary rotor position sensors obtaining angular position of a rotor of the respective third, fourth, fifth, sixth and/or seventh motor. The third, fourth, fifth, sixth and/or seventh secondary sensors may be third, fourth, fifth, sixth and/or seventh secondary current sensors measuring current drawn by the respective third, fourth, fifth, sixth and/or seventh motor. The third, fourth, fifth, sixth and/or seventh secondary sensors may be third, fourth, fifth, sixth and/or seventh secondary torque sensors obtaining the torque provided by the respective third, fourth, fifth, sixth and/or seventh motor.

In some examples, one or more of the sensors may form part of the respective circuitry of the joint assembly. For example, the circuitry of the joint assembly may comprise one or more of the sensors. For example, the one more sensors may be provided as components on a PCB, which may be the same PCB also comprising one or more of the processing units. For example, the first circuitry may comprise the first primary sensor and/or the first secondary sensor and/or the second primary sensor and/or the second secondary sensor. The second circuitry may comprise the third primary sensor and/or the third secondary sensor and/or the fourth primary sensor and/or the fourth secondary sensor. The third circuitry may comprise the fifth primary sensor and/or the fifth secondary sensor and/or the sixth primary sensor and/or the sixth secondary sensor. The fourth circuitry may comprise the seventh primary sensor and/or the seventh secondary sensor. Providing sensors as part of the circuitry, such as a PCB, may be particularly practical for sensors sensing electrical parameters, such as current sensors. However, other sensors may also benefit from forming part of the circuitry.

The first processing unit may receive, e.g. from the first primary sensor and/or the first secondary sensor, a first primary sensor signal indicative of the first motion characteristic. The first processing unit may calculate the first motion characteristic at least based on the first primary sensor signal. The second processing unit may receive, e.g. from the first primary sensor and/or from the first secondary sensor, a first secondary sensor signal indicative of the first motion characteristic. The second processing unit may calculate the first motion characteristic at least based on the first secondary sensor signal. The first processing unit may receive, e.g. from the second primary sensor and/or the second secondary sensor, a second primary sensor signal indicative of the second motion characteristic. The first processing unit may calculate the second motion characteristic at least based on the second primary sensor signal. The second processing unit may receive, e.g. from the second primary sensor and/or the second secondary sensor, a second secondary sensor signal indicative of the second motion characteristic. The second processing unit may calculate the second motion characteristic at least based on the first secondary sensor signal.

Similarly, the third, fifth, and/or seventh processing unit may receive, e.g. from a primary sensor and/or a secondary sensor, such as the third, fourth, fifth, sixth and/or seventh primary sensor and/or the third, fourth, fifth, sixth and/or seventh secondary sensor, a third, fourth, fifth, sixth and/or seventh primary sensor signal respectively indicative of the third, fourth, fifth, sixth and/or seventh motion characteristic. The third, fifth, and/or seventh processing unit may calculate the third, fourth, fifth, sixth and/or seventh motion characteristic at least based on the respective third, fourth, fifth, sixth and/or seventh primary sensor signal. The fourth, sixth, and/or eighth processing unit may receive, e.g. from the primary sensor and/or the secondary sensor, such as the third, fourth, fifth, sixth and/or seventh primary sensor and/or the third, fourth, fifth, sixth and/or seventh secondary sensor, a third, fourth, fifth, sixth and/or seventh secondary sensor signal respectively indicative of the third, fourth, fifth, sixth and/or seventh motion characteristic. The fourth, sixth, and/or eighth processing unit may calculate the third, fourth, fifth, sixth and/or seventh motion characteristic at least based on the third, fourth, fifth, sixth and/or seventh secondary sensor signal.

In some examples, a primary sensor signal and a secondary sensor signal may be received from the same sensor, such as a primary sensor and/or a secondary sensor. However, in other examples the primary sensor signal may be received from the primary sensor and the secondary sensor signal may be received from the secondary sensor, wherein the primary sensor and the secondary sensor are different sensors, e.g. of the same type or different types. In some examples the primary sensor and/or the secondary sensor may comprise a plurality of sub-sensors, e.g. the primary sensor may comprise a plurality of current sensors, such as a plurality of current sensors respectively sensing current in a plurality of phases. Hence, the primary sensor signal and/or the secondary sensor signal may comprise a plurality of sub-signals from a plurality of sub-sensors. In some examples, the primary sensor has one or more sub-sensors in common with the secondary sensor. In some examples, the primary sensor has less than all sub-sensors in common with the secondary sensor.

By the present disclosure, each motion characteristic may be redundantly measured and calculated, such as to ensure correctness of the obtained motion characteristics, and/or to at least reduce the likelihood that an erroneous value is not relied upon.

For example, for obtaining the angular position (and/or change of angular position) between the joint housing and a corresponding link, a primary sensor may be a primary output position sensor of the relevant motor. Such output position sensor may be realised by a primary magnetic sensor sensing the magnetic field of a magnetic pole ring coupled to the output part of the motor. The secondary sensor providing the corresponding redundant output position signal, may correspond to a secondary magnetic sensor, which may use the same magnetic pole ring, or alternatively another magnetic pole ring, coupled to the output part of the motor. One processor may calculate the output position based on the output position signal from the primary sensor and another processor, e.g. of the same joint assembly, may calculate the output position based on the output position signal from the secondary sensor. Such angular position and/or change of angular position may be supplemented or replaced by sensing position of the rotor of the motor, which may be realised similarly by magnetic sensors sensing a magnetic field of a magnetic pole ring coupled to the rotor of the motor.

Alternatively or additionally, for obtaining the amount of torque provided by a motor, torque sensors may be applied. In some examples, a torque sensor may be realised by an output position sensor and a rotor position sensor, as described above, and evaluating the difference between the anticipated output position based on the rotor position and the gear ratio of the motor, and the actual output position based on the output position sensor. Thus, providing two independent rotor position sensors and two independent output position sensors effectively provides for two independent torque sensors. The amount of torque provided by the motor may alternatively or additionally be obtained by a strain gauge circuit, e.g. applied to the flex spline of the motor (if the motor comprises a strain wave gear).

The amount of torque may alternatively or additionally be obtained based on the current drawn by the motor. Thus, providing one or more current sensors may be utilized to obtain the amount of torque provided by the motor.

To obtain current drawn by the motor, one or more current sensors may be provided. The amount of torque may alternatively or additionally be obtained based on the current drawn by the motor. Thus, providing one or more current sensors may alternatively or additionally be utilized to obtain the amount of torque provided by the motor. In case of a multiphase motor, current may be measured on each phase. Thus, in case of a three-phase motor, three current sensors may be provided, one for each phase. Thereby, the current drawn by the motor may be obtained redundantly, as it is established that the resulting current should be 0 in view of Kirchoff's current law. Hence, for example, one processing unit may calculate the current based on sensors on phases one and two, while another processing unit may calculate the current based on sensors on phases one and three. Alternatively, both processing units may each redundantly calculate the current based on measurement from all three sensors.

Some of the above mentioned sensors, e.g. the output position sensor, the rotor position sensors, the torque sensor, and/or the current sensor(s) may form part of the respective motor.

One or both of the two processing units of the same joint assembly may be adapted to compare the two calculated motion characteristics of the joint assembly. For example, the first processing unit and/or the second processing unit may be adapted to compare the two calculated first motion characteristics. For example, the first processing unit and/or the second processing unit may be adapted to compare the first motion characteristic of the first link relative to the joint housing calculated by the first processing unit at least based on the first primary sensor signal with the first motion characteristic of the first link relative to the joint housing calculated by the second processing unit at least based on the first secondary sensor signal. In accordance with the comparison revealing that the calculated motion characteristics, such as the first motion characteristics, differ by more than a differing threshold (the differing threshold may be more than 0, and the differing threshold may, for example, be more than 0.01% and/or less than 5%, such as less than 3%, such as less than 1%, such as less than 0.5%, such as less than 0.1%, such as less than 0.01%), the processing units may cause the motors to stop, e.g. the first processing unit may cause the first motor to stop and/or the second processing unit may cause the second motor to stop. Thus, the robot may be configured to stop movement, in case it is discovered that calculations of movement characteristics are inconsistent, e.g. because a sensor is providing an erroneous signal or if a processor wrongly calculates the result.

Some of the processing units, e.g. two processing units of one joint assembly, may provide for a central redundant calculation of one or more motion characteristics of further rotatable joints, such as all rotatable joints. In some examples, some of the processing units, e.g. two processing units of one joint assembly, may provide for a central redundant calculation of one or more overall motion characteristic(s) of one or more of the links or joint assemblies, such as joint housings, relative to a common reference point, e.g. the base of the robot. The one or more overall motion characteristic(s) may comprise movement and/or position and/or torque of a link and/or joint housing relative to the common reference point. For example, the first processing unit, the second processing unit, the third processing unit, the fourth processing unit, the fifth processing unit, the sixth processing unit, the seventh processing unit and/or the eighth processing unit may receive one or more further signals, e.g. one or more further sensor signals, indicative of one or more motion characteristics of the other rotatable joints, such as the one or more further rotatable joints. The first processing unit, the second processing unit, the third processing unit, the fourth processing unit, the fifth processing unit, the sixth processing unit, the seventh processing unit and/or the eighth processing unit may calculate the one or more motion characteristics and/or the one or more overall motion characteristics of the other rotatable joints, such as of each of the other rotatable joints, at least based on the one or more further signals.

In some examples, the first processing unit, the third processing unit, the fifth processing unit and/or the seventh processing unit may receive one or more further primary signals, e.g. one or more further primary sensor signals, indicative of one or more motion characteristics of the other rotatable joints, such as the one or more further rotatable joints. The first processing unit, the third processing unit, the fifth processing unit and/or the seventh processing unit may calculate the one or more motion characteristics and/or the one or more overall motion characteristics of the other rotatable joints, such as of each of the other rotatable joints, at least based on the one or more further primary signals. The second processing unit, the fourth processing unit, the sixth processing unit and/or the eighth processing unit may receive one or more further secondary signals, e.g. one or more further secondary sensor signals, indicative of the one or more motion characteristics of the other rotatable joints. The second processing unit, the fourth processing unit, the sixth processing unit and/or the eighth processing unit may calculate the one or more motion characteristics and/or the one or more overall motion characteristics of the other rotatable joints, such as of each of the other rotatable joints at least based on the one or more further secondary sensor signal. For example, the first processing unit and/or the second processing unit may receive, from the third processing unit and/or the fourth processing unit, a third motion characteristic signal indicative of the third motion characteristic of the second link relative to the second joint housing, and the first processing unit and/or the second processing unit may calculate a second overall motion characteristic of the second joint assembly, such as the second joint housing, relative to the common reference point based on the third motion characteristic signal. The second overall motion characteristic may further be based on the first motion characteristic of the first link relative to the first joint housing and/or the second motion characteristic of the second link relative to the first joint housing. Similarly, the first processing unit and/or the second processing unit may receive, from the third processing unit and/or the fourth processing unit, a fourth motion characteristic signal indicative of the fourth motion characteristic of the third link relative to the second joint housing, and the first processing unit and/or the second processing unit may calculate a third overall motion characteristic of the third link relative to the common reference point based on the fourth motion characteristic signal. The third overall motion characteristic may further be based on the first motion characteristic of the first link relative to the first joint housing, the second motion characteristic of the second link relative to the first joint housing and/or the third motion characteristic of the second link relative to the second joint housing.

Alternatively or additionally, processing units of each joint assembly may redundantly calculate overall motion characteristic(s) of itself and/or attached links, relative to the common reference point based on information from the immediate priorly located joint assembly. For example, the third processing unit and/or the fourth processing unit may receive a first overall motion characteristic signal from the first processing unit and/or the second processing unit indicative of a first overall motion characteristic of the second link relative to the common reference point, e.g. the base. The third processing unit and/or the fourth processing unit may calculate a second overall motion characteristic of the second joint housing and/or the third link relative to the common reference point based on the first overall motion characteristic signal. Calculation of the second overall motion characteristic may further be based on the third motion characteristic of the second link relative to the second joint housing and/or the fourth motion characteristic of the third link relative to the second joint housing, as calculated by the third processing unit and/or the fourth processing unit. In some examples, the third processing unit may receive a first primary overall motion characteristic signal from the first processing unit indicative of the first overall motion characteristic, and the fourth processing unit may receive a first secondary overall motion characteristic signal from the second processing unit indicative of the first overall motion characteristic. The third processing unit may calculate the second overall motion characteristic based on the first primary overall motion characteristic signal, and the fourth processing unit may calculate the second overall motion characteristic based on the first secondary overall motion characteristic signal.

Similarly, the fifth processing unit and/or the sixth processing unit may receive a second overall motion characteristic signal (e.g. a second primary overall motion characteristic signal and/or a second secondary overall motion characteristic signal) from the third processing unit and/or the fourth processing unit indicative of the second overall motion characteristic. The fifth processing unit and/or the sixth processing unit may calculate a third overall motion characteristic of the third joint housing and/or the fourth link relative to the common reference point based on the second overall motion characteristic signal (e.g. the second primary overall motion characteristic signal and/or the second secondary overall motion characteristic signal). The same applies for more distantly arranged joints.

### BRIEF DESCRIPTION OF THE FIGURES

Embodiments of the disclosure will be described in more detail in the following with regard to the accompanying figures. The figures show one way of implementing the present disclosure and are not to be construed as being limiting to other possible embodiments falling within the scope of the attached claim set.
Fig. 1 is a schematic diagram illustrating an exemplary robot,
Fig. 2 is a schematic diagram illustrating an exemplary joint assembly,
Fig. 3 is a schematic block diagram illustrating exemplary circuitry,
Fig. 4 is a schematic diagram illustrating an exemplary joint assembly
Fig. 5 is a schematic block diagram illustrating exemplary circuitry.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

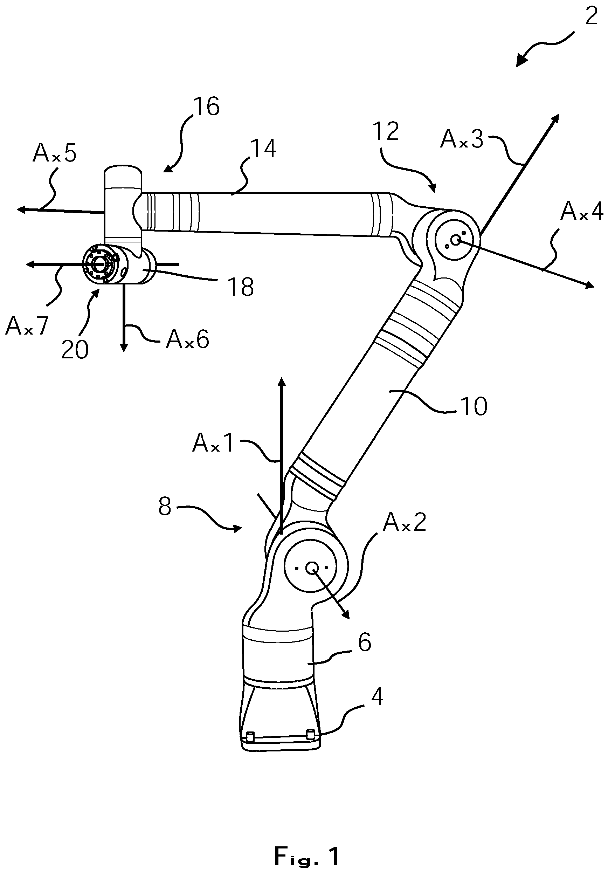

Fig. 1 is a schematic diagram illustrating an exemplary robot 2, which in the present example is a robotic arm, more particularly, a seven axis robotic arm.

The robot 2 comprises a plurality of joint assemblies, including a first joint assembly 8, a second joint assembly 12, a third joint assembly 16, and a fourth joint assembly 20. In other examples, the robot may comprise fewer or more joint assemblies. For example, the robot 2 may, in another configuration, comprise only one joint assembly, such as the first joint assembly 8.

The robot 2 comprises a plurality of links, including a first link 6, a second link 10, a third link 14, and a fourth link 18. The links extends between the joint assemblies. For example, the first link 6 extends between a base 4 of the robot 2 and the first joint assembly 8. The second link 10 extends between the first joint assembly 8 and the second joint assembly 12. The third link 14 extends between the second joint assembly 12 and the third joint assembly 16. The fourth link 18 extends between the third joint assembly 16 and the fourth joint assembly 20.

Each of the joint assemblies 8, 12, 16, 20 are adapted to rotate one or more respective links relative to the joint assembly around an axis. For example, the first joint assembly 8 is adapted to rotate the first link 6 relative to the first joint assembly 8 around a first axis Ax1. The first joint assembly 8 is adapted to rotate the second link 10 relative to the first joint assembly 8 around a second axis Ax2. The second axis Ax2 is non-parallel with the first axis Ax1. The second joint assembly 12 is adapted to rotate the second link 10 relative to the second joint assembly 12 around a third axis Ax3. The second joint assembly 12 is adapted to rotate the third link 14 relative to the second joint assembly 12 around a fourth axis Ax4. The fourth axis Ax4 is non-parallel with the third axis Ax3. The third joint assembly 16 is adapted to rotate the third link 14 relative to the third joint assembly 16 around a fifth axis Ax5. The third joint assembly 16 is adapted to rotate the fourth link 18 relative to the third joint assembly 16 around a sixth axis Ax6. The sixth axis Ax6 is non-parallel with the fifth axis Ax5. The fourth joint assembly 20 is adapted to rotate the fourth link 18 relative to the fourth joint assembly 20 around a seventh axis Ax7. The robot 2 may be put in some configurations where none of the seven axes Ax1-Ax7 are parallel. However, in some other configurations two or more of the seven axes may be parallel.

Although being described in relation to a robot 2 being operable relative to seven axes, the present disclosure may alternatively be applied to a robot having only six axes, or even fewer axes. For example, with respect to the example illustrated in Fig. 1, movement around the third axis Ax3, may be omitted, to obtain a robot operable relative to six axes. In such situation, the first joint assembly 8 may be adapted to rotate the first link 6 relative to the first joint assembly 8 around the first axis Ax1 and to rotate the second link 10 relative to the first joint assembly 8 around the second axis Ax2. The second joint assembly 12 may be adapted to rotate the third link 14 relative to the second joint assembly 12 around the fourth axis Ax4 and to rotate the third link 14 relative to the second joint assembly 12 around the fifth axis Ax5. The third joint assembly 16 may be adapted to rotate the third link 14 relative to the third joint assembly 16 around the sixth axis Ax6 and to rotate the fourth link 18 relative to the third joint assembly 16 around the seventh axis Ax7. The fourth joint assembly 20 may be omitted. Hence, a robot operable relative to six axes may be realised with only three joint assemblies according to the present disclosure.

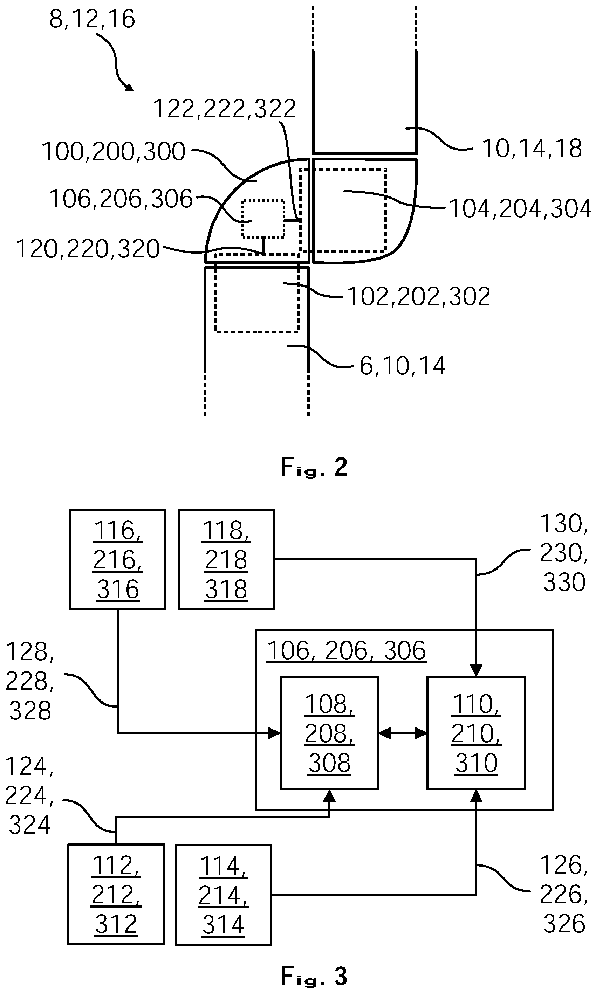

Fig. 2 is a schematic diagram illustrating an exemplary joint assembly 8, 12, 16, such as the corresponding joint assemblies as shown in Fig. 1. As illustrated, the first joint assembly 8, the second joint assembly 12 and the third joint assembly 16 may be substantially identical. Therefore, the three different joint assemblies are illustrated using the same schematic diagram.

The first joint assembly 8 comprises a first joint housing 100. The first joint assembly 8 comprises a first motor 102 connecting the first joint housing 100 with the first link 6. The first motor 102 is adapted to rotate the first link 6 relative to the first joint housing 100 around a first axis Ax1 (see Fig. 1). The first joint assembly 8 comprises a second motor 104 connecting the first joint housing 100 with the second link 10. The second motor 104 is adapted to rotate the second link 10 relative to the first joint housing 100 around the second axis Ax2 (see Fig. 1). The first joint assembly 8 comprises first circuitry 106, e.g. a first PCB, accommodated in the first joint housing 100. The first circuitry 106 is adapted to control the first motor 102 and the second motor 104.

The second joint assembly 12 comprises a second joint housing 200. The second joint assembly 12 comprises a third motor 202 connecting the second joint housing 200 with the second link 10. The third motor 202 is adapted to rotate the second link 10 relative to the second joint housing 200 around a third axis Ax3 (see Fig. 1). The second joint assembly 12 comprises a fourth motor 204 connecting the second joint housing 200 with the third link 14. The fourth motor 204 is adapted to rotate the third link 14 relative to the second joint housing 200 around the fourth axis Ax4 (see Fig. 1). The second joint assembly 12 comprises second circuitry 206, e.g. a second PCB, accommodated in the second joint housing 200. The second circuitry 206 is adapted to control the third motor 202 and the fourth motor 204.

The third joint assembly 16 comprises a third joint housing 300. The third joint assembly 16 comprises a fifth motor 302 connecting the third joint housing 300 with the third link 14. The fifth motor 302 is adapted to rotate the third link 14 relative to the third joint housing 300 around a fifth axis Ax5 (see Fig. 1). The third joint assembly 16 comprises a sixth motor 304 connecting the third joint housing 300 with the fourth link 18. The sixth motor 304 is adapted to rotate the fourth link 18 relative to the third joint housing 300 around the sixth axis Ax6 (see Fig. 1). The third joint assembly 16 comprises third circuitry 306, e.g. a third PCB, accommodated in the third joint housing 300. The third circuitry 306 is adapted to control the fifth motor 302 and the sixth motor 304.

Each motor 102, 104, 202, 204, 302, 304 comprises a control interface 120, 122, 220, 222, 320, 322. As illustrated, the two motors 102, 202, 302 and 104, 204, 304 are arranged such that their respective control interface 120, 220, 320 and 122, 222, 322 are facing each other and/or the interior of their respective joint housing 100, 200, 300. For example, the first control interface 120 of the first motor 102 is facing towards the second control interface 122 of the second motor 104. The third control interface 220 of the third motor 202 is facing towards the fourth control interface 222 of the fourth motor 204. The fifth control interface 320 of the fifth motor 302 is facing towards the sixth control interface 322 of the sixth motor 304.

Fig. 3 is a schematic block diagram illustrating an exemplary circuitry 106, 206, 306 of a corresponding joint assembly 8, 12, 16 as shown in Fig. 2. As illustrated, the first circuitry 106, the second circuitry 206, and the third circuitry 306 may be substantially identical. Therefore, the three different circuitries are illustrated using the same schematic block diagram.

The first circuitry 106 comprises a first processing unit 108 and a second processing unit 110. The first processing unit 108 is adapted to control the first motor 102 (see Fig. 2). The second processing unit 110 is adapted to control the second motor 104 (see Fig. 2).

The second circuitry 206 comprises a third processing unit 208 and a fourth processing unit 210. The third processing unit 208 is adapted to control the third motor 202 (see Fig. 2). The fourth processing unit 210 is adapted to control the fourth motor 204 (see Fig. 2).

The third circuitry 306 comprises a fifth processing unit 308 and a sixth processing unit 310. The fifth processing unit 308 is adapted to control the fifth motor 302 (see Fig. 2). The sixth processing unit 310 is adapted to control the sixth motor 304 (see Fig. 2).

The processing units 108, 110, 208, 210, 308, 310 are adapted to receive sensor signals from various sensors, which may provide sensor signals indicative of motion characteristics of the links relative to respective joint housings. The two processing units of each circuitry may receive redundant sensor signals from different sensors, but indicative of the same parameter. Thereby, the two processing units may independently calculate a motion characteristic and compare if the results are matching each other. Thereby, a safety mechanism is achieved by redundantly calculating motion characteristics, and the risk of potential erroneous calculations or erroneous sensor outputs not being detected, is reduced.

For example, as illustrated, the first processing unit 108 receives a first primary sensor signal 124 from a first primary sensor 112. The first primary sensor signal 124 may be indicative of a first motion characteristic (e.g. one or more of movement, position, torque, etc.) of the first link relative to the first joint housing. Thereby, the first processing unit 108 may calculate the first motion characteristic of the first link relative to the first joint housing at least based on the first primary sensor signal 124. The second processing unit 110 receives a first secondary sensor signal 126 from a first secondary sensor 114. The first secondary sensor signal 126 may also be indicative of the first motion characteristic of the first link relative to the first joint housing. For example, the first primary sensor 112 and the first secondary sensor 114 may both be sensors individually sensing an output position of the first motor. Thereby, the second processing unit 110 may calculate the first motion characteristic of the first link relative to the first joint housing at least based on the first secondary sensor signal 126. Thereby, the first motion characteristic of the first link relative to the first joint housing may be sensed and calculated redundantly resulting in a more fail-safe system.

As also illustrated, the first processing unit 108 may receive a second primary sensor signal 128 from a second primary sensor 116. The second primary sensor signal may be indicative of a second motion characteristic (e.g. one or more of movement, position, torque, etc.) of the second link relative to the first joint housing. Thereby, the first processing unit 108 may calculate the second motion characteristic of the second link relative to the first joint housing at least based on the second primary sensor signal 128. The second processing unit 110 receives a second secondary sensor signal 130 from a second secondary sensor 118. The second secondary sensor signal may be indicative of the second motion characteristic of the second link relative to the first joint housing. Thereby, the second processing unit 110 may calculate the second motion characteristic of the second link relative to the first joint housing at least based on the second secondary sensor signal 130. Thus, similarly as for the first motion characteristic of the first link relative to the first joint housing, the second motion characteristic of the second link relative to the first joint housing may be redundantly calculated.

Similarly, the processors 208, 210 of circuitry 206 of the second joint assembly, and processors 308, 310 of circuitry 306 of the third joint assembly may receive sensor signals 224, 226, 228, 230, 324, 326, 328, 330 from sensors 212, 214, 216, 218, 312, 314, 316, 318, allowing redundant acquiring and calculation of motion characteristics of relevant links.

The sensors 112, 114, 116, 212, 214, 216, 218, 312, 314, 316, 318 may comprise output position sensors obtaining angular position of links relative to joint housings, rotor position sensors obtaining angular position of a rotor of a motor, current sensors measuring current drawn by a motor, and/or torque sensors obtaining torque provided by a motor.

Although, in the present example, the sensors 112, 114, 116, 212, 214, 216, 218, 312, 314, 316, 318, are illustrated as being external to the circuitry 106, 206, 306, some sensors may be provided on the circuitry, e.g. on the same PCB as the processing units 108, 110, 208, 210, 308, 310. For example, one or more of the sensors 112, 114, 116, 212, 214, 216, 218, 312, 314, 316, 318 may include one or more current sensors measuring current drawn by a motor. The one or more current sensors may conveniently be provided on the same PCB as the processing unit controlling the motors.

In some situations, it may be practical to route both primary sensor signals 124, 128, 224, 228, 324, 328 and secondary sensor signals 126, 130, 226, 230, 326, 330 to both processing units 108, 110, 208, 210, 308, 310. The processing units 108, 110, 208, 210, 308, 310 may in such situation calculate the motion characteristics based on different sensor signals, such as only the primary sensor signal 124, 128, 224, 228, 324, 328 or the secondary sensor signal 126, 130, 226, 230, 326, 330. However, alternatively, the processing units 108, 110, 208, 210, 308, 310 may in such situation redundantly calculate the motion characteristics based on both the primary sensor signal 124, 128, 224, 228, 324, 328 and the secondary sensor signal 126, 130, 226, 230, 326, 330. Particularly, in case of current measurements, it is practical to base calculations by both processing units 108, 110, 208, 210, 308, 310 on all current measurements, e.g. provided to measure current on each phase of a multiphase motor. In such setup redundancy in the measurement may be achieved in that it is established that the resulting current should be 0 in view of Kirchoff's current law. Hence, each phase current may be calculated based on measurements of current in the remaining phases and validated by comparison with the corresponding measured value. Thereby, redundancy of the current measurement may be observed, although each phase current is measured only by a single current sensor. The resulting values may be verified by the two processing units of the same circuitry.

The first processing unit 108 and/or the second processing unit 110 are adapted to compare the first motion characteristic calculated by the first processing unit 108 with the first motion characteristic calculated by the second processing unit 110. In some examples, in accordance with the comparison revealing that the calculated first motion characteristics differ by more than a differing threshold, safety measures may be taken. For example, the first processing unit 108 may cause the first motor to stop and/or the second processing unit 110 may cause the second motor to stop. Similarly, the processors, 208, 210 of the second circuitry 206 may be adapted to compare redundantly calculated motion characteristics and initiate safety measures in case difference. Similarly, the processors, 308, 310 of the third circuitry 306 may be adapted to compare redundantly calculated motion characteristics and initiate safety measures in case difference. In some examples, a difference between any redundantly calculated motion characteristics may result in all processing units of all joint assemblies to cause all motors to stop movements.

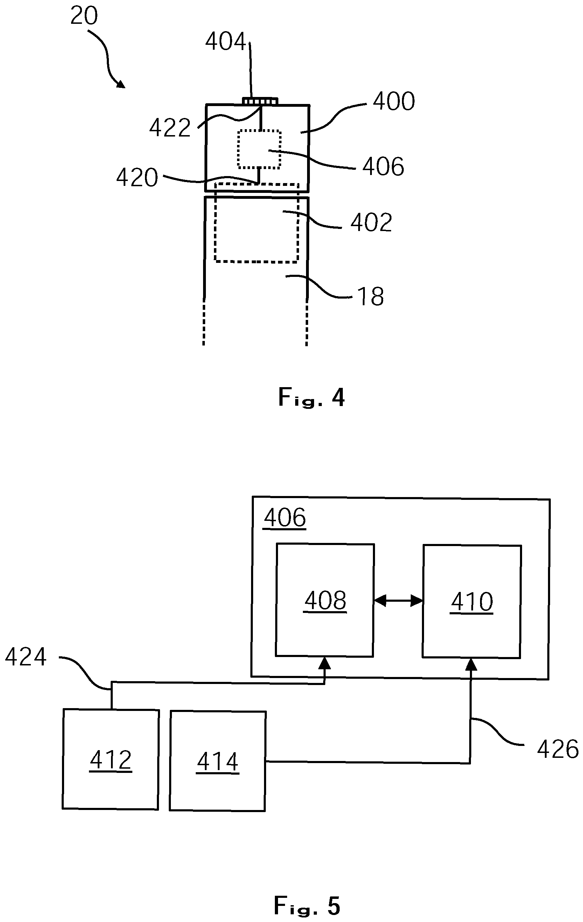

In some examples, the two processing units of one circuitry, e.g. the first processing unit 108 and the second processing unit 110 of the first circuitry 106, receives sensor signals from more, such as all, joint assemblies of the robot and redundantly calculates motion characteristics of one or more or each of the joint assemblies, e.g. relative to a common reference point and/or relative to individual joint assemblies. For example, the first processing unit 108 may receive the first primary sensor signal 124, the second primary sensor signal 128, the third primary sensor signal 224, the fourth primary sensor signal 228, the fifth primary sensor signal 324, the sixth primary sensor signal 328, and the seventh primary sensor signal 424 (see Fig. 5). Thereby, the first processing unit 108 may calculate motion characteristics of each of the joint assemblies, e.g. relative to a common reference point and/or relative to individual joint assemblies. Similarly, the second processing unit 110 may receive the first secondary sensor signal 126, the second secondary sensor signal 130, the third secondary sensor signal 226, the fourth secondary sensor signal 230, the fifth secondary sensor signal 326, the sixth secondary sensor signal 330, and the seventh secondary sensor signal 426 (see Fig. 5). Thus, calculations of motion characteristics relying on sensor input from several joints, such as motion characteristics relative to a common reference point, may similarly be redundantly calculated by a pair of processing units, such as the first processing unit 108 and the second processing unit 110.

The sensor signals, 124, 126, 128, 130, 224, 226, 228, 230, 324, 326, 328, 330 may be distributed through the system to allow the processing units of one joint assembly to calculate the motion characteristics based on sensor inputs from several joints. For example, the fifth processing unit 308 and the sixth processing unit 310 may transmit the fifth primary sensor signal 324, the fifth secondary sensor signal 326, the sixth primary sensor signal 328, and the sixth secondary sensor signal 330 to the third processing unit 208 and the fourth processing unit 210. The third processing unit 208 and the fourth processing unit 210 may transmit the third primary sensor signal 224, the fifth primary sensor signal 324, the third secondary sensor signal 226, the fifth secondary sensor signal 326, the fourth primary sensor signal 228, the sixth primary sensor signal 328, the fourth secondary sensor signal 230, and the sixth secondary sensor signal 330 to the first processing unit 108 and the second processing unit 110. Thereby, the first processing unit 108 and the second processing unit 110 may receive all sensor signals.

Alternatively or additionally, processing units of each of the joint assemblies may calculate an overall motion characteristic relative to a common reference point, e.g. the base 4 of the robot 2 (see Fig. 1), of the joint assembly itself and/or of a link extending from the respective joint assembly. For example, the first processing unit 108 and/or the second processing unit 110 may calculate a first overall motion characteristic of the second link relative to a common reference point, e.g. the base of the robot. The first processing unit 108 and/or the second processing unit 110 may be capable to calculate the first overall motion characteristic of the second link relative to the common reference point because the common reference point is directly coupled to the first joint assembly, e.g. by the first link 6 (see Fig. 1). The first processing unit 108 and/or the second processing unit 110 may transmit the first overall motion characteristic of the second link as a first overall motion characteristic signal to the third processing unit 208 and/or the fourth processing unit 210. Because the first overall motion characteristic signal is indicative of the first overall motion characteristic of the second link, and the second joint assembly is directly coupled to the second link, the third processing unit and/or the fourth processing unit is able to calculate a second and/or third overall motion characteristic of the second joint housing and/or the third link relative to the common reference point based on the first motion characteristic signal, as well as the third primary sensor signal 224, the third secondary sensor signal 226, the fourth primary sensor signal 228, and the fourth secondary sensor signal 230, as needed. By such procedure, global motion characteristics of each link and joint may be calculated in a distributed manner, as the processing units of each joint assembly may each calculate the global motion characteristics of itself and associated links.

Alternatively or additionally, the calculated motion characteristics from each processing unit of each joint assembly, e.g. after the two processing units of the same joint assembly have verified that their calculated results match, may be transmitted to processing units of one joint assembly, so as to allow the two processing units of that one joint assembly to redundantly calculate the overall motion characteristics relative to the common reference point. For example, the fifth processing unit 308 may transmit the calculated fifth and sixth motion characteristic to the first processing unit 108, and the third processing unit 208 may transmit the calculated third and fourth motion characteristic to the first processing unit 108. Thereby, as the first processing unit 108 itself has calculated the first and second motion characteristic, the first processing unit 108 may calculate overall motion characteristics of each of the links and/or joints relative to the common reference point. To provide for redundancy, the sixth processing unit 310 may transmit the calculated fifth and sixth motion characteristic to the second processing unit 110, and the fourth processing unit 210 may transmit the calculated third and fourth motion characteristic to the second processing unit 110. Together with its own calculated first and second motion characteristic, the second processing unit 110 may also calculate the overall motion characteristics of each of the links relative to the common reference point.

Transmission of data between the processing units may be facilitated by bus communication, such as a secured bus communication, wherein the signals may be encrypted such as to ensure they are only read and used by the intended receiving processing unit.

Fig. 4 is a schematic diagram illustrating an exemplary joint assembly 20, such as the fourth joint assembly 20 as shown in Fig. 1. The fourth joint assembly 20 comprises a fourth joint housing 400. The fourth joint assembly 20 comprises a seventh motor 402 connecting the fourth joint housing 400 with the fourth link 18. The seventh motor 402 is adapted to rotate the fourth link 18 relative to the fourth joint housing 400 around the seventh axis Ax7 (see Fig. 1). The fourth joint assembly 20 comprises a tool interface 404 adapted for connecting the fourth joint housing 400 with a tool to be controlled by the robot 2. The fourth joint assembly 20 comprises fourth circuitry 406, such as a fourth PCB, accommodated in the fourth joint housing 400. The fourth circuitry 406 is adapted to control the seventh motor 402 and the tool interface 404.

The seventh motor 402 comprises a seventh control interface 420. The tool interface 404 comprises a tool control interface 422. As illustrated, the seventh motor 402 and the tool interface 404 are arranged such that their respective control interfaces 420, 422 are facing each other and/or the interior of the fourth joint housing 400. The seventh control interface 420 of the seventh motor 402 is facing towards the tool control interface 422 of the tool interface 404.

Fig. 5 is a schematic block diagram illustrating exemplary circuitry 406, such as the fourth circuitry 406 of the fourth joint assembly 20 as shown in Fig. 4. The fourth circuitry 406 comprises a seventh processing unit 408 and an eighth processing unit 410. The seventh processing unit 408 is adapted to control the seventh motor 402 (see Fig. 4). The eighth processing unit 410 is adapted to control the tool interface 404 (see Fig. 2).

The seventh processing unit 408 receives a seventh primary sensor signal 424 from a seventh primary sensor 412. The seventh primary sensor signal 424 may be indicative of a seventh motion characteristic (e.g. one or more of movement, position, torque, etc.) of the fourth link relative to the fourth joint housing. Thereby, the seventh processing unit 408 may calculate the seventh motion characteristic of the fourth link relative to the fourth joint housing at least based on the seventh primary sensor signal 424. The eighth processing unit 410 receives a seventh secondary sensor signal 426 from a seventh secondary sensor 414. The seventh secondary sensor signal 426 may also be indicative of the seventh motion characteristic of the fourth link relative to the fourth joint housing. Thereby, the eighth processing unit 410 may calculate the seventh motion characteristic of the fourth link relative to the fourth joint housing at least based on the seventh secondary sensor signal 426.

The disclosure has been described with reference to a preferred embodiment. However, the scope of the invention is not limited to the illustrated embodiment, and alterations and modifications can be carried out without deviating from the scope of the invention.

Throughout the description, the use of the terms "first", "second", "third", "fourth", "primary", "secondary", "tertiary" etc. does not imply any particular order or importance but are included to identify individual elements. Furthermore, the labelling of a first element does not imply the presence of a second element and vice versa.

### LIST OF REFERENCES

- 2: robot
- 4: base
- 6: first link
- 8: first joint assembly
- 10: second link
- 12: second joint assembly
- 14: third link
- 16: third joint assembly
- 18: fourth link
- 20: fourth joint assembly

- 100: first joint housing
- 102: first motor
- 104: second motor
- 106: first circuitry
- 108: first processing unit
- 110: second processing unit
- 112: first primary sensor
- 114: first secondary sensor
- 116: second primary sensor
- 118: second secondary sensor
- 120: first control interface
- 122: second control interface
- 124: first primary sensor signal
- 126: first secondary sensor signal
- 128: second primary sensor signal
- 130: second secondary sensor signal

- 200: second joint housing
- 202: third motor
- 204: fourth motor
- 206: second circuitry
- 208: third processing unit
- 210: fourth processing unit
- 212: third primary sensor
- 214: third secondary sensor
- 216: fourth primary sensor
- 218: fourth secondary sensor
- 220: third control interface
- 222: fourth control interface
- 224: third primary sensor signal
- 226: third secondary sensor signal
- 228: fourth primary sensor signal
- 230: fourth secondary sensor signal

- 300: third joint housing
- 302: fifth motor
- 304: sixth motor
- 306: third circuitry
- 308: fifth processing unit
- 310: sixth processing unit
- 312: fifth primary sensor
- 314: fifth secondary sensor
- 316: sixth primary sensor
- 318: sixth secondary sensor
- 320: fifth control interface
- 322: sixth control interface
- 324: fifth primary sensor signal
- 326: fifth secondary sensor signal
- 328: sixth primary sensor signal
- 330: sixth secondary sensor signal

- 400: fourth joint housing
- 402: seventh motor
- 404: tool interface
- 406: fourth circuitry
- 408: seventh processing unit
- 410: eighth processing unit
- 412: seventh primary sensor
- 414: seventh secondary sensor
- 420: seventh control interface
- 422: tool control interface
- 424: seventh primary sensor signal
- 426: seventh secondary sensor signal

- Ax1: first axis
- Ax2: second axis
- Ax3: third axis
- Ax4: fourth axis
- Ax5: fifth axis
- Ax6: sixth axis
- Ax7: seventh axis

## Claims

1. A joint assembly (8, 12, 16, 20) for a robot (2), comprising:
- a joint housing (100),
- a first motor (102) connecting the joint housing with a first link (6) and the first motor being adapted to rotate the first link relative to the joint housing around a first axis (AX1),
- a second motor (104) connecting the joint housing with a second link (10) and the second motor being adapted to rotate the second link relative to the joint housing around a second axis (AX2) non-parallel with the first axis,
- circuitry (106) accommodated in the joint housing and comprising a first processing unit (108) and a second processing unit (110), the first processing unit being adapted to control the first motor and the second processing unit being adapted to control the second motor,
wherein the first processing unit receives a first primary sensor signal (124) indicative of a first motion characteristic of the first link relative to the joint housing and calculates the first motion characteristic of the first link relative to the joint housing at least based on the first primary sensor signal, and
wherein the second processing unit receives a first secondary sensor signal (126) indicative of the first motion characteristic of the first link relative to the joint housing and calculates the first motion characteristic of the first link relative to the joint housing at least based on the first secondary sensor signal.

2. Joint assembly according to claim 1, wherein the first processing unit and/or the second processing unit are adapted to compare the first motion characteristic of the first link relative to the joint housing calculated by the first processing unit at least based on the first primary sensor signal with the first motion characteristic of the first link relative to the joint housing calculated by the second processing unit at least based on the first secondary sensor signal, and wherein, in accordance with the comparison revealing that the calculated first motion characteristics differ by more than a differing threshold, the first processing unit causes the first motor to stop and/or the second processing unit causes the second motor to stop.

3. Joint assembly according to any one of the preceding claims, wherein the first motor comprises a first control interface and the second motor comprises a second control interface, and wherein the first control interface is facing towards the second control interface.

4. Joint assembly according to any one of the preceding claims, wherein the first processing unit receives the first primary sensor signal from a first primary sensor, and/or wherein the second processing unit receives the first secondary sensor signal from a first secondary sensor.

5. Joint assembly according to claim 4, wherein the first primary sensor is one of a first primary output position sensor obtaining angular position of the first link relative to the joint housing, a first primary rotor position sensor obtaining angular position of a rotor of the first motor, a first primary current sensor measuring current drawn by the first motor, and a first primary torque sensor.

6. Joint assembly according to any one of claims 4-5, wherein the first secondary sensor is one of a first secondary output position sensor obtaining angular position of the first link relative to the joint housing, a first secondary rotor position sensor obtaining angular position of a rotor of the first motor, one or more first secondary current sensor measuring current drawn by the first motor, and a first secondary torque sensor.

7. Joint assembly according to any one of the preceding claims, wherein the first processing unit receives, e.g. from a second primary sensor, a second primary sensor signal indicative of a second motion characteristic of the second link relative to the joint housing and calculates the second motion characteristic of the second link relative to the joint housing at least based on the second primary sensor signal, and
wherein the second processing unit receives, e.g. from a second secondary sensor, a second secondary sensor signal indicative of the second motion characteristic of the second link relative to the joint housing and calculates the second motion characteristic of the second link relative to the joint housing at least based on the second secondary sensor signal.

8. Robot comprising a first joint assembly according to the joint assembly of any one of the preceding claims.

9. Robot according to claim 8 comprising one or more further rotatable joints, and wherein the first processing unit receives one or more further primary signals indicative of one or more motion characteristics of the one or more further rotatable joints and calculates the one or more motion characteristics of each of the one or more further rotatable joints at least based on the one or more further primary signals, and wherein the second processing unit receives one or more further secondary signals indicative of the one or more motion characteristics of the one or more further rotatable joints and calculates the one or more motion characteristics of the one or more further rotatable joints at least based on the one or more further secondary signal.

10. Robot according to any one of claims 8-9 comprising a plurality of motors including the first motor and the second motor, causing relative rotation around a plurality of respective axes including the first axis and the second axis, and wherein the plurality of motors are at least 6 motors and the plurality of respective axes are at least 6 axes.

11. Robot according to any one of claims 8-10 comprising a second joint assembly comprising:
- a second joint housing, wherein the second link extends between the joint housing of the first joint assembly and the second joint housing,
- a third motor connecting the second joint housing with the second link and the third motor being adapted to rotate the second link relative to the second joint housing around a third axis,
- second circuitry accommodated in the second joint housing and comprising a third processing unit and a fourth processing unit, the third processing unit being adapted to control the third motor,
wherein the third processing unit receives, e.g. from a third primary sensor, a third primary sensor signal indicative of a third motion characteristic of the second link relative to the second joint housing and calculates the third motion characteristic of the second link relative to the second joint housing at least based on the third primary sensor signal, and
wherein the fourth processing unit receives, e.g. from a third secondary sensor, a third secondary sensor signal indicative of the third motion characteristic of the second link relative to the second joint housing and calculates the third motion characteristic of the second link relative to the second joint housing at least based on the third secondary sensor signal.

12. Robot according to claim 11, wherein the third processing unit and/or the fourth processing unit receives a first overall motion characteristic signal from the first processing unit and/or the second processing unit indicative of a first overall motion characteristic of the second link relative to a common reference point, and wherein the third processing unit and/or the fourth processing unit calculates a second overall motion characteristic of the second joint housing relative to the common reference point based on the first overall motion characteristic signal.

13. Robot according to any one of claims 11-12, wherein the first processing unit and/or the second processing unit receives, from the third processing unit and/or the fourth processing unit, a third motion characteristic signal indicative of the third motion characteristic of the second link relative to the second joint housing, and wherein the first processing unit and/or the second processing unit calculates a second overall motion characteristic of the second joint housing relative to the common reference point based on the third motion characteristic signal.

14. Robot according to any one of claims 11-13, wherein the second joint assembly comprises a fourth motor connecting the second joint housing with the third link and the fourth motor being adapted to rotate the third link relative to the second joint housing around a fourth axis non-parallel with the third axis, the fourth processing unit being adapted to control the fourth motor.

15. Robot according to claim 14, wherein the third processing unit receives, e.g. from a fourth primary sensor, a fourth primary sensor signal indicative of a fourth motion characteristic of the third link relative to the second joint housing and calculates the fourth motion characteristic of the third link relative to the second joint housing at least based on the fourth primary sensor signal, and
wherein the fourth processing unit receives, e.g. from a fourth secondary sensor, a fourth secondary sensor signal indicative of the fourth motion characteristic of the third link relative to the first joint housing and calculates the fourth motion characteristic of the third link relative to the first joint housing at least based on the fourth secondary sensor signal.

## Patentansprüche

1. Gelenkbaugruppe (8, 12, 16, 20) für einen Roboter (2), umfassend:
- ein Gelenkgehäuse (100),
- einen ersten Motor (102), der das Gelenkgehäuse mit einem ersten Verbindungsglied (6) verbindet, und wobei der erste Motor ausgelegt ist, um das erste Verbindungsglied relativ zum Gelenkgehäuse um eine erste Achse (AX1) zu drehen,
- einen zweiten Motor (104), der das Gelenkgehäuse mit einem zweiten Verbindungsglied (10) verbindet, wobei der zweite Motor ausgelegt ist, um das zweite Verbindungsglied relativ zum Gelenkgehäuse um eine zweite Achse (AX2) zu drehen, die nicht parallel zur ersten Achse verläuft,
- Schaltung (106), die in dem Gelenkgehäuse untergebracht ist und eine erste Verarbeitungseinheit (108) und eine zweite Verarbeitungseinheit (110) umfasst, wobei die erste Verarbeitungseinheit ausgelegt ist, um den ersten Motor zu steuern, und die zweite Verarbeitungseinheit ausgelegt ist, um den zweiten Motor zu steuern,
wobei die erste Verarbeitungseinheit ein erstes primäres Sensorsignal (124) empfängt, das eine erste Bewegungskenngröße des ersten Verbindungsglieds relativ zum Gelenkgehäuse anzeigt, und die erste Bewegungskenngröße des ersten Verbindungsglieds relativ zum Gelenkgehäuse zumindest auf der Grundlage des ersten primären Sensorsignals berechnet, und
wobei die zweite Verarbeitungseinheit ein erstes sekundäres Sensorsignal (126) empfängt, das die erste Bewegungskenngröße des ersten Verbindungsglieds relativ zum Gelenkgehäuse anzeigt, und die erste Bewegungskenngröße des ersten Verbindungsglieds relativ zum Gelenkgehäuse zumindest auf der Grundlage des ersten sekundären Sensorsignals berechnet.

2. Gelenkbaugruppe nach Anspruch 1, wobei die erste Verarbeitungseinheit und/oder die zweite Verarbeitungseinheit ausgelegt sind, um die erste Bewegungskenngröße des ersten Verbindungsglieds relativ zum Gelenkgehäuse, die von der ersten Verarbeitungseinheit zumindest auf der Grundlage des ersten primären Sensorsignals berechnet wurde, mit der ersten Bewegungskenngröße des ersten Verbindungsglieds relativ zum Gelenkgehäuse, die von der zweiten Verarbeitungseinheit zumindest auf der Grundlage des ersten sekundären Sensorsignals berechnet wurde, zu vergleichen, und wobei, gemäß dem Vergleich, der zeigt, dass die berechnete, erste Bewegungskenngröße um mehr als einen abweichenden Schwellenwert voneinander abweichen, die erste Verarbeitungseinheit den ersten Motor zum Anhalten veranlasst und/oder die zweite Verarbeitungseinheit den zweiten Motor zum Anhalten veranlasst.

3. Gelenkbaugruppe nach einem der vorstehenden Ansprüche, wobei der erste Motor eine erste Steuerschnittstelle umfasst und der zweite Motor eine zweite Steuerschnittstelle umfasst, und wobei die erste Steuerschnittstelle zur zweiten Steuerschnittstelle hin ausgerichtet ist.

4. Gelenkbaugruppe nach einem der vorstehenden Ansprüche, wobei die erste Verarbeitungseinheit das erste primäre Sensorsignal von einem ersten primären Sensor empfängt, und/oder wobei die zweite Verarbeitungseinheit das erste sekundäre Sensorsignal von einem ersten sekundären Sensor empfängt.

5. Gelenkbaugruppe nach Anspruch 4, wobei der erste primäre Sensor einer von einem ersten primären Ausgangspositionssensor, der die Winkelposition des ersten Verbindungsglieds relativ zum Gelenkgehäuse erfasst, einem ersten primären Rotorpositionssensor, der die Winkelposition eines Rotors des ersten Motors erfasst, einem ersten primären Stromsensor, der den vom ersten Motor aufgenommenen Strom misst, und einem ersten primären Drehmomentsensor ist.

6. Gelenkbaugruppe nach einem der Ansprüche 4-5, wobei der erste sekundäre Sensor einer von einem ersten sekundären Ausgangspositionssensor, der die Winkelposition des ersten Verbindungsglieds relativ zum Gelenkgehäuse ermittelt, einem ersten sekundären Rotorpositionssensor, der die Winkelposition eines Rotors des ersten Motors ermittelt, einem oder mehreren ersten sekundären Stromsensoren, die den vom ersten Motor aufgenommenen Strom messen, und einem ersten sekundären Drehmomentsensor ist.

7. Gelenkbaugruppe nach einem der vorstehenden Ansprüche, wobei die erste Verarbeitungseinheit, z.B. von einem zweiten primären Sensor, ein zweites primäres Sensorsignal empfängt, das eine zweite Bewegungskenngröße des zweiten Verbindungsglieds relativ zum Gelenkgehäuse anzeigt, und die zweite Bewegungskenngröße des zweiten Verbindungsglieds relativ zum Gelenkgehäuse zumindest auf der Grundlage des zweiten primären Sensorsignals berechnet, und wobei die zweite Verarbeitungseinheit, z.B. von einem zweiten sekundären Sensor, ein zweites sekundäres Sensorsignal empfängt, das die zweite Bewegungskenngröße des zweiten Verbindungsglieds relativ zum Gelenkgehäuse anzeigt, und die zweite Bewegungskenngröße des zweiten Verbindungsglieds relativ zum Gelenkgehäuse zumindest auf der Grundlage des zweiten sekundären Sensorsignals berechnet.

8. Roboter umfassend eine erste Gelenkanordnung nach einem der vorstehenden Ansprüche.

9. Roboter nach Anspruch 8, umfassend ein oder mehrere weitere drehbare Gelenke, und wobei die erste Verarbeitungseinheit ein oder mehrere weitere primäre Signale empfängt, die eine oder mehrere Bewegungskenngrößen des einen oder der mehreren weiteren drehbaren Gelenke anzeigen, und die eine oder mehrere Bewegungskenngrößen jedes der einen oder mehreren weiteren drehbaren Gelenke zumindest auf der Grundlage des einen oder der mehreren weiteren primären Signale berechnet, und wobei die zweite Verarbeitungseinheit ein oder mehrere weitere sekundäre Signale empfängt, die die eine oder mehrere Bewegungskenngrößen des einen oder der mehreren weiteren drehbaren Gelenke anzeigen, und die eine oder mehrere Bewegungskenngrößen des einen oder der mehreren weiteren drehbaren Gelenke zumindest auf der Grundlage des einen oder der mehreren weiteren sekundären Signale berechnet.

10. Roboter nach einem der Ansprüche 8-9, umfassend eine Vielzahl von Motoren, einschließlich des ersten Motors und des zweiten Motors, die eine relative Drehung um eine Vielzahl von jeweiligen Achsen bewirken, einschließlich der ersten Achse und der zweiten Achse, und wobei es sich bei der Vielzahl der Motoren um mindestens 6 Motoren und bei der Vielzahl der jeweiligen Achsen um mindestens 6 Achsen handelt.

11. Roboter nach einem der Ansprüche 8-10, umfassend eine zweiten Gelenkanordnung, umfassend:
- ein zweites Gelenkgehäuse, wobei sich das zweite Verbindungsglieds zwischen dem Gelenkgehäuse der ersten Gelenkanordnung und dem zweiten Gelenkgehäuse erstreckt,
- einen dritten Motor, der das zweite Gelenkgehäuse mit dem zweiten Verbindungsglied verbindet, wobei der dritte Motor dazu ausgelegt ist, das zweite Verbindungsglied relativ zum zweiten Gelenkgehäuse um eine dritte Achse zu drehen,
- eine zweite Schaltung, die in dem zweiten Gelenkgehäuse untergebracht ist und eine dritte Verarbeitungseinheit und eine vierte Verarbeitungseinheit umfasst, wobei die dritte Verarbeitungseinheit dazu ausgelegt ist, den dritten Motor zu steuern,
wobei die dritte Verarbeitungseinheit, z.B. von einem dritten primären Sensor, ein drittes primäres Sensorsignal empfängt, das eine dritte Bewegungskenngröße des zweiten Verbindungsglieds relativ zum zweiten Gelenkgehäuse anzeigt, und die dritte Bewegungskenngröße des zweiten Verbindungsglieds relativ zum zweiten Gelenkgehäuse zumindest auf der Grundlage des dritten primären Sensorsignals berechnet, und
wobei die vierte Verarbeitungseinheit, z.B. von einem dritten sekundären Sensor, ein drittes sekundäres Sensorsignal empfängt, das die dritte Bewegungskenngröße des zweiten Verbindungsglieds relativ zum zweiten Gelenkgehäuse anzeigt, und die dritte Bewegungskenngröße des zweiten Verbindungsglieds relativ zum zweiten Gelenkgehäuse zumindest auf der Grundlage des dritten sekundären Sensorsignals berechnet.

12. Roboter nach Anspruch 11, wobei die dritte Verarbeitungseinheit und/oder die vierte Verarbeitungseinheit ein erstes Gesamtbewegungskenngrößensignal von der ersten Verarbeitungseinheit und/oder der zweiten Verarbeitungseinheit empfängt, das eine erste Gesamtbewegungskenngröße des zweiten Verbindungsglieds relativ zu einem gemeinsamen Bezugspunkt angibt, und wobei die dritte Verarbeitungseinheit und/oder die vierte Verarbeitungseinheit eine zweite Bewegungskenngröße des zweiten Gelenkgehäuses relativ zu dem gemeinsamen Bezugspunkt auf der Grundlage des ersten Gesamtbewegungskenngrößensignals berechnet.

13. Roboter nach einem der Ansprüche 11-12, wobei die erste Verarbeitungseinheit und/oder die zweite Verarbeitungseinheit von der dritten Verarbeitungseinheit und/oder der vierten Verarbeitungseinheit ein drittes Bewegungskenngrößensignal empfängt, das die dritte Bewegungskenngröße des zweiten Verbindungsglieds relativ zu dem zweiten Gelenkgehäuse anzeigt, und wobei die erste Verarbeitungseinheit und/oder die zweite Verarbeitungseinheit eine zweite Gesamtbewegungskenngröße des zweiten Gelenkgehäuses relativ zu dem gemeinsamen Bezugspunkt auf der Grundlage des dritten Bewegungskenngrößensignals berechnet.

14. Roboter nach einem der Ansprüche 11-13, wobei die zweite Gelenkbaugruppe einen vierten Motor umfasst, der das zweite Gelenkgehäuse mit dem dritten Verbindungsglied verbindet, und der vierte Motor ausgelegt ist, das dritte Verbindungsglied relativ zum zweiten Gelenkgehäuse um eine vierte Achse zu drehen, die nicht parallel zur dritten Achse verläuft, wobei die vierte Verarbeitungseinheit geeignet ist, den vierten Motor zu steuern.

15. Roboter nach Anspruch 14, wobei die dritte Verarbeitungseinheit, z.B. von einem vierten primären Sensor, ein viertes primäres Sensorsignal empfängt, das eine vierte Bewegungskenngröße des dritten Verbindungsglieds relativ zum zweiten Gelenkgehäuse anzeigt, und die vierte Bewegungskenngröße des dritten Verbindungsglieds relativ zum zweiten Gelenkgehäuse zumindest auf der Grundlage des vierten primären Sensorsignals berechnet, und
wobei die vierte Verarbeitungseinheit, z.B. von einem vierten sekundären Sensor, ein viertes sekundäres Sensorsignal empfängt, das die vierte Bewegungskenngröße des dritten Verbindungsglieds relativ zum ersten Gelenkgehäuse anzeigt, und die vierte Bewegungskenngröße des dritten Verbindungsglieds relativ zum ersten Gelenkgehäuse zumindest auf der Grundlage des vierten sekundären Sensorsignals berechnet.

## Revendications

1. Ensemble articulation (8, 12, 16, 20) pour un robot (2), comprenant :
- un boîtier (100) d'articulation,
- un premier moteur (102) reliant le boîtier d'articulation à un premier maillon (6) et le premier moteur étant conçu pour faire tourner le premier maillon par rapport au boîtier d'articulation autour d'un premier axe (AX1),
- un deuxième moteur (104) reliant le boîtier d'articulation à un deuxième maillon (10) et le deuxième moteur étant conçu pour faire tourner le deuxième maillon par rapport au boîtier d'articulation autour d'un deuxième axe (AX2) non parallèle au premier axe,
- un circuit (106) logé dans le boîtier d'articulation et comprenant une première unité de traitement (108) et une deuxième unité de traitement (110), la première unité de traitement étant conçue pour commander le premier moteur et la deuxième unité de traitement étant conçue pour commander le deuxième moteur,
dans lequel la première unité de traitement reçoit un premier signal de capteur primaire (124) indiquant une première caractéristique de déplacement du premier maillon par rapport au boîtier d'articulation et calcule la première caractéristique de déplacement du premier maillon par rapport au boîtier d'articulation au moins sur la base du premier signal de capteur primaire, et
dans lequel la deuxième unité de traitement reçoit un premier signal de capteur secondaire (126) indiquant la première caractéristique de déplacement du premier maillon par rapport au boîtier d'articulation et calcule la première caractéristique de déplacement du premier maillon par rapport au boîtier d'articulation au moins sur la base du premier signal de capteur secondaire.

2. Ensemble articulation selon la revendication 1, dans lequel la première unité de traitement et/ou la deuxième unité de traitement sont conçues pour comparer la première caractéristique de déplacement du premier maillon par rapport au boîtier d'articulation calculée par la première unité de traitement au moins sur la base du premier signal de capteur primaire à la première caractéristique de déplacement du premier maillon par rapport au boîtier d'articulation calculée par la deuxième unité de traitement au moins sur la base du premier signal de capteur secondaire, et dans lequel, conformément à la comparaison révélant que les premières caractéristiques de déplacement calculées diffèrent de plus d'un seuil de différence, la première unité de traitement provoque l'arrêt du premier moteur et/ou la deuxième unité de traitement provoque l'arrêt du deuxième moteur.

3. Ensemble articulation selon l'une quelconque des revendications précédentes, dans lequel le premier moteur comprend une première interface de commande et le deuxième moteur comprend une deuxième interface de commande, et dans lequel la première interface de commande est orientée vers la deuxième interface de commande.

4. Ensemble articulation selon l'une quelconque des revendications précédentes, dans lequel la première unité de traitement reçoit le premier signal de capteur primaire en provenance d'un premier capteur primaire, et/ou dans lequel la deuxième unité de traitement reçoit le premier signal de capteur secondaire en provenance d'un premier capteur secondaire.

5. Ensemble articulation selon la revendication 4, dans lequel le premier capteur primaire est l'un d'un premier capteur de position de sortie primaire obtenant une position angulaire du premier maillon par rapport au boîtier d'articulation, un premier capteur de position de rotor primaire obtenant une position angulaire d'un rotor du premier moteur, un premier capteur de courant primaire mesurant le courant prélevé par le premier moteur, et un premier capteur de couple primaire.

6. Ensemble articulation selon l'une quelconque des revendications 4 à 5, dans lequel le premier capteur secondaire est l'un d'un premier capteur de position de sortie secondaire obtenant une position angulaire du premier maillon par rapport au boîtier d'articulation, un premier capteur de position de rotor secondaire obtenant une position angulaire d'un rotor du premier moteur, un ou plusieurs premiers capteurs de courant secondaires mesurant le courant prélevé par le premier moteur, et un premier capteur de couple secondaire.

7. Ensemble articulation selon l'une quelconque des revendications précédentes, dans lequel la première unité de traitement reçoit, par exemple en provenance d'un deuxième capteur primaire, un deuxième signal de capteur primaire indiquant une deuxième caractéristique de déplacement du deuxième maillon par rapport au boîtier d'articulation et calcule la deuxième caractéristique de déplacement du deuxième maillon par rapport au boîtier d'articulation au moins sur la base du deuxième signal de capteur primaire, et dans lequel la deuxième unité de traitement reçoit, par exemple en provenance d'un deuxième capteur secondaire, un deuxième signal de capteur secondaire indiquant la deuxième caractéristique de déplacement du deuxième maillon par rapport au boîtier d'articulation et calcule la deuxième caractéristique de déplacement du deuxième maillon par rapport au boîtier d'articulation au moins sur la base du deuxième signal de capteur secondaire.

8. Robot comprenant un premier ensemble articulation selon l'ensemble articulation selon l'une quelconque des revendications précédentes.

9. Robot selon la revendication 8 comprenant une ou plusieurs autres articulations rotatives, et dans lequel la première unité de traitement reçoit un ou plusieurs autres signaux primaires indiquant une ou plusieurs caractéristiques de déplacement des une ou plusieurs autres articulations rotatives et calcule les une ou plusieurs caractéristiques de déplacement de chacun des une ou plusieurs autres articulations rotatives au moins sur la base des un ou plusieurs autres signaux primaires, et dans lequel la deuxième unité de traitement reçoit un ou plusieurs autres signaux secondaires indiquant les une ou plusieurs caractéristiques de déplacement des une ou plusieurs autres articulations rotatives et calcule les une ou plusieurs caractéristiques de déplacement des une ou plusieurs autres articulations rotatives au moins sur la base des un ou plusieurs autres signaux secondaires.

10. Robot selon l'une quelconque des revendications 8 à 9 comprenant une pluralité de moteurs incluant le premier moteur et le deuxième moteur, entraînant une rotation relative autour d'une pluralité d'axes respectifs incluant le premier axe et le deuxième axe, et dans lequel la pluralité de moteurs sont au moins 6 moteurs et la pluralité d'axes respectifs sont au moins 6 axes.

11. Robot selon l'une quelconque des revendications 8 à 10 comprenant un deuxième ensemble articulation comprenant :
- un deuxième boîtier d'articulation, dans lequel le deuxième maillon s'étend entre le boîtier d'articulation du premier ensemble articulation et le deuxième boîtier d'articulation,
- un troisième moteur reliant le deuxième boîtier d'articulation au deuxième maillon et le troisième moteur étant conçu pour faire tourner le deuxième maillon par rapport au deuxième boîtier d'articulation autour d'un troisième axe,
- un deuxième circuit logé dans le deuxième boîtier d'articulation et comprenant une troisième unité de traitement et une quatrième unité de traitement, la troisième unité de traitement étant conçue pour commander le troisième moteur,
dans lequel la troisième unité de traitement reçoit, par exemple en provenance d'un troisième capteur primaire, un troisième signal de capteur primaire indiquant une troisième caractéristique de déplacement du deuxième maillon par rapport au deuxième boîtier d'articulation et calcule la troisième caractéristique de déplacement du deuxième maillon par rapport au deuxième boîtier d'articulation au moins sur la base du troisième signal de capteur primaire, et
dans lequel la quatrième unité de traitement reçoit, par exemple, en provenance d'un troisième capteur secondaire, un troisième signal de capteur secondaire indiquant la troisième caractéristique de déplacement du deuxième maillon par rapport au deuxième boîtier d'articulation et calcule la troisième caractéristique de déplacement du deuxième maillon par rapport au deuxième boîtier d'articulation au moins sur la base du troisième signal de capteur secondaire.

12. Robot selon la revendication 11, dans lequel la troisième unité de traitement et/ou la quatrième unité de traitement reçoit un premier signal de caractéristique de déplacement globale en provenance de la première unité de traitement et/ou de la deuxième unité de traitement indiquant une première caractéristique de déplacement globale du deuxième maillon par rapport à un point de référence commun, et dans lequel la troisième unité de traitement et/ou la quatrième unité de traitement calcule une deuxième caractéristique de déplacement globale du deuxième boîtier d'articulation par rapport au point de référence commun sur la base du premier signal de caractéristique de déplacement globale.

13. Robot selon l'une quelconque des revendications 11 à 12, dans lequel la première unité de traitement et/ou la deuxième unité de traitement reçoit, en provenance de la troisième unité de traitement et/ou de la quatrième unité de traitement, un troisième signal de caractéristique de déplacement indiquant la troisième caractéristique de déplacement du deuxième maillon par rapport au deuxième boîtier d'articulation, et dans lequel la première unité de traitement et/ou la deuxième unité de traitement calcule une deuxième caractéristique de déplacement globale du deuxième boîtier d'articulation par rapport au point de référence commun sur la base du troisième signal de caractéristique de déplacement.

14. Robot selon l'une quelconque des revendications 11 à 13, dans lequel le deuxième ensemble articulation comprend un quatrième moteur reliant le deuxième boîtier d'articulation au troisième maillon et le quatrième moteur étant conçu pour faire tourner le troisième maillon par rapport au deuxième boîtier d'articulation autour d'un quatrième axe non parallèle au troisième axe, la quatrième unité de traitement étant conçue pour commander le quatrième moteur.

15. Robot selon la revendication 14, dans lequel la troisième unité de traitement reçoit, par exemple, en provenance d'un quatrième capteur primaire, un quatrième signal de capteur primaire indiquant une quatrième caractéristique de déplacement du troisième maillon par rapport au deuxième boîtier d'articulation et calcule la quatrième caractéristique de déplacement du troisième maillon par rapport au deuxième boîtier d'articulation au moins sur la base du quatrième signal de capteur primaire, et dans lequel la quatrième unité de traitement reçoit, par exemple en provenance d'un quatrième capteur secondaire, un quatrième signal de capteur secondaire indiquant la quatrième caractéristique de déplacement du troisième maillon par rapport au premier boîtier d'articulation et calcule la quatrième caractéristique de déplacement du troisième maillon par rapport au premier boîtier d'articulation au moins sur la base du quatrième signal de capteur secondaire.
